# EUROPÄISCHE PATENTSCHRIFT

(11) **EP 0 638 387 B1**
(45) Veröffentlichungstag und Bekanntmachung des Hinweises auf die Patenterteilung: **15.04.1998**
(21) Anmeldenummer: 94112184.0
(22) Anmeldetag: 04.08.1994
(51) Int. Cl.: B23P 6/00, B23K 11/00, F01D 5/00

(54) **Reparaturverfahren für beschädigte Schaufelblätter von Turbomaschinen**
Method for repairing damaged airfoils of turbine engines
Procédé de réparation pour aubes endommagées des turbines

(30) Priorität: 13.08.1993 DE 4327189
(43) Veröffentlichungstag der Anmeldung: 15.02.1995
(73) Patentinhaber: MTU MOTOREN- UND TURBINEN-UNION MÜNCHEN GMBH, 80976 München (DE)
(72) Erfinder: Richter, Karl-Hermann, Dr., D-85229 Indersdorf (DE); Meier, Reinhold, D-84405 Dorfen-Stadt (DE); Schmitt, Thilo, D-68535 Edingen (DE); Stimper, Bernd, D-85221 Dachau (DE)

(56) Entgegenhaltungen:
- EP-A- 0 389 913
- EP-A- 0 392 656
- GB-A- 1 269 598
- US-A- 4 164 061
- DEUTSCHER VERBAND FÜR SCHWEISSTECHNIK, Bd.85, 1978 Seiten 72 - 79 W. JÜRGENS 'Situation of welding in engine maintenance'

## Beschreibung

Die Erfindung betrifft ein Reparaturverfahren für im Kopf- oder Kantenbereich beschädigte Schaufelblätter von Turbomaschinen, wobei zunächst die beschädigten Bereiche bis auf einen unbeschädigten Schaufelblattstumpf im wesentlichen quer zur Längserstreckung der Schaufel oder schräg zur Vorder- oder Hinterkante der Schaufel oder annähernd halbkreisförmig um den beschädigten Schaufelblattbereich herum abgetrennt werden, um eine gerade oder annähernd halbkreisförmige Reparaturfläche zu bilden. Danach wird die Reparaturfläche des Schaufelblattstumpfes für eine Stumpfschweißung vorbereitet, wobei
eine Reparaturplatte von konstanter, die Profildicke der Schaufel übersteigender Dicke mit einer der Reparaturfläche angepaßten Stirnseite stumpf mit der Reparaturfläche, verschweißt wird und
abschließend die Reparaturplatte auf die Profilkontur des Schaufelblattstumpfes und auf das gewünschte Schaufelblattprofil abgearbeitet werden.

Ein derartiges Verfahren zur Reparatur von Turbinenschaufeln ist in der EP 389 913 A1 offenbart. Dort wird vorgeschlagen, die beschädigten Bereiche des Schaufelblattes bis auf einen unbeschädigten Schaufelblattstumpf abzutrennen und eine Reparaturplatte mit einer der Reparaturfläche angepaßten Stirnseite stumpf auf die Reparaturfläche mittels Kehlnähten aufzuschweißen.

Ein ähnliches Verfahren ist für die Reparatur von Gebläseschaufeln (FAN-Schaufeln) von Turbomaschinen aus Titan aus der Druckschrift "Stand der Technik in der Triebwerksüberholung", Deutscher Verband für Schweißtechnik, Berichtsband 85, 1978, Seiten 72 bis 79 bekannt. Bei diesem Verfahren werden passende Zusatzwerkstoffstreifen auf dem Rand des Schaufelblattstumpfes oder auf der Reparaturfläche und entsprechend passende Auslaufecken aus Zusatzwerkstoff oder Werkstoff des Schaufelblattstumpfes an der Vorder- und/oder Hinterkante des Schaufelblattes positioniert und eine Reparaturplatte mindestens in der Größe des abgetrennten, beschädigten Schaufelblattbereichs mit einer Stirnseite passgenau zu den Zusatzwerkstoffstreifen und den Auslaufecken sowie zu dem Schaufelblattstumpf angelegt und mittels Elektronenstrahlschweißung verschweißt, wobei die Zusatzwerkstoffstreifen und Auslaufecken teilweise oder vollständig, sowie die Stirnseite der Reparaturplatte mit dem Schaufelblattstumpf verschweißt werden.

Ein wesentlicher Nachteil dieses Reparaturverfahrens ist, daß es aufgrund der aufwendigen Präparation von vier bis fünf Paßstücken zur Reparatur einer Schaufelblattbeschädigung für die Reparatur vieler kleiner und kleinster Schaufeln beispielsweise von Verdichter- oder Turbinenrädern ungeeignet ist. Für eine gewerblich sinnvolle Reparatur von Bauteilen von Turbomaschinen ist es erforderlich, daß die Reparaturkosten unter ca. 60% der Herstellungskosten eines Bauteils bleiben, was für großvolumige FAN-Schaufeln aus Titan mit entsprechend hohen Material- und Fertigungskosten bei dem obigen Verfahren erfüllt ist, aber bei kleinvolumigen Bauteilen mit dem obigen Verfahren nicht erreicht werden kann.

Darüber hinaus ist aus der EP-A-0 392 656 bekannt, daß zur Reparatur von Turbinenschaufeln ein paßgenaues und im Profil mit dem beschädigten Bereich deckungsgleiches Ersatzstück herzustellen ist, das dann an den Schaufelblattstumpf mit einer X-Naht angeschweißt wird. Ein Nachteil dieses Verfahrens ist die paßgenaue Vorbereitung eines Ersatzstückes und ein weiterer Nachteil das Erfordernis von Füllmaterial, das der Schweißnaht zugeführt werden muß.

Aus DIN 65 118, Teil 2, Seite 7, Tabelle 3 ist bekannt, daß für eine Stumpfschweißung die anzuschweißende Reparaturplatte ein festgelegtes Übermaß von 50% nicht überschreiten darf und bei hoher Beanspruchung möglichst angepaßte Querschnitte zwischen zu fügenden Bauteilen anzustreben sind. Für das Anschweißen von Reparaturplatten an Schaufelblattstümpfen bedeutet das, daß entweder die Reparaturplatte der Kontur des Schaufelblattstumpfes vor dem Anschweißen genau anzupassen ist oder nur maximal bis zu dem vorgegebenen Übermaß über die Kontur hinausragen sollte. Problematisch wird die Anwendung dieser Standardisierung im Bereich der Vorder- und Hinterkante einer Schaufel, an denen die Profildicke gegen Null geht. Hier müßte mit aufwendigen Bearbeitungsverfahren dafür gesorgt werden, daß die Reparaturplatte der Kontur des Schaufelblattstumpfes folgend nicht über das vorgegebene zulässige Übermaß hinausragt.

Wird ohne Übermaß mit einer profilgenauen Reparaturplatte und ohne Zusatzwerkstoff geschweißt, so ergeben sich nachteilig gravierende Mängel. Es bilden sich Randkerben zu beiden Seiten des Schweißstoßes. Im Bereich der Hinter- und Vorderkante des Schaufelblattes treten wegen der gegen Null gehenden Schaufelblattdicke starke Instabilitäten des Schweißbades trotz komplexer und aufwendiger Regelung der Schweißparameter in Abhängigkeit von Profildickenverlauf auf. Das kann zum Durchsacken des Schweißbades und zum Abreißen des Schmelzbades führen. Es muß u.U. zu den Kanten hin das Schmelzbad durch Unterlegen von angepaßten Formteilen gegen Durchsacken und Abriß nachteilig gestützt werden. Ein Füllmaterial, das die Randkerben auffüllt und sich zu einer erhabenen Schweißraupe muß anschließend abgearbeitet werden, um einen störungsfreien, eingeebneten Übergang zwischen dem Profil des Schaufelblattstumpfes und dem der profilierten Reparaturplatte zu erreichen.

Ein weiterer Nachteil beim Stumpfschweißen von profilierten Reparaturplatten, die dem Schaufelblattstumpfprofil angepaßt sind, ist bei der geringen Dicke der Schaufelblätter besonders von Verdichterlaufschaufeln der unvermeidbare Verzug sowohl des Schaufelblattstumfes als auch der profilierten Reparaturplatten. Neben dem Abarbeiten der Schweißraupe wird deshalb ein aufwendiges Nachrichten der reparierten Schaufel erforderlich.

Aufgabe der Erfindung ist ein gattungsgemäßes Verfahren anzugeben, das die Nachteile im Stand der Technik überwindet. Dieses Verfahren soll die bisher bekannten Verfahren wesentlich vereinfachen und kostengünstige Reparaturmöglichkeiten für Schaufeln von Turbomaschinen bieten ohne aufwendige Präparation von Paßstücken. Komplexe Algorithmen, wie sie zur Steuerung von Schweißautomaten zur Stumpfschweißung von Bauteilen mit Dickenänderungen erforderlich werden, sollen mit diesem Verfahren entbehrlich werden.

Gelöst wird die Aufgabe dadurch, daß eine Reparaturplatte von konstanter, die maximale Profilhöhe der Schaufel um mehr als 50% übersteigender Dicke mit einer der Reparaturfläche angepaßten Stirnseite stumpf auf die Reparaturfläche geheftet wird und danach der Schaufelblattstumpf und die Reparaturplatte mittels Stumpfschweißung verschweißt und abschließend die Schweißfuge und die Reparaturplatte auf die Profilkontur des Schaufelblattstumpfes und auf das gewünschte Schaufelblattprofil abgearbeitet werden.

Dabei wird vorteilhaft ohne Füllmaterialzugabe gearbeitet. Als maximale Profilhöhe wird der Abstand zwischen zwei parallelen Geraden, zwischen denen das Schaufelprofil der Reparaturfläche tangential angeordnet werden kann, verstanden.

Das Verfahren hat den Vorteil, daß die Schweißparameter während der Stumpfschweißung nur auf eine Dicke, nämlich die konstante Dicke der Reparaturplatte einzustellen sind und das Verfahren unabhängig von der Profildicke der Reparaturfläche des Schaufelblattstumpfes, die an den Kanten gegen Null gehen kann, durchführbar ist, ohne daß Schweißbadinstabilitäten im Kantenbereich auftreten. Das extrem hohe Übermaß der Dicke der Reparaturplatte in den Kantenbereichen entgegen den standardisierten Vorschriften der DIN 65 118 sorgt für einen thermischen Ausgleich, so daß die Schweißschmelze nicht abreißt oder durchsackt, sondern adhäsiv an der übergroßen Stirnseite der Reparaturplatte bis zum Erstarren der Schmelze zu sich bildenden kehlnahtförmigen Schweißraupen gehalten wird. Das macht vorteilhaft angepaßte Formteile im Kantenbereich, die die Schmelze von unten stützen entbehrlich. Die Ausbildung kehlnahtförmiger Ober- und Unterraupen wird aus dem Materialvorrat der Stirnseite der Reparaturplatte gespeist, so daß vorteilhaft alle Zusatzwerkstoffstreifen oder Auslaufecken oder ein Nachführen von Füllmaterial entfallen.

Ein weiterer Vorteil dieses Reparaturverfahrens liegt darin, daß einlagig die Reparaturplatte an den Schaufelblattstumpf geschweißt werden kann, obwohl die Stirnseite eine Dicke aufweist, die die Profilhöhe der Schaufel um mehr als 50% übersteigt. Bei derart unterschiedlichen Material stärken muß üblicherweise mehrlagig geschweißt werden. Ein abschließendes Abarbeiten der angeschweißten Reparaturplatte auf das vorgegebene Schaufelblattprofil wird vorzugsweise spanabhebend oder elektrochemisch durchgeführt.

In einer bevorzugten Durchführung des Verfahrens wird durch örtlichen Versatz der Energiequelle relativ zum Schweißstoß die Energiezufuhr bei der Stumpfschweißung zu mehr als 5/9 auf die Reparaturplatte gerichtet. Das hat den Vorteil, daß der wesentlichste Anteil der Schweißenergie nicht das Schaufelprofil trifft, sondern vielmehr zur Anschmelzung der Stirnseite der Reparaturplatte bis mindestens zur Unterseite des anliegenden Schaufelblattstumpfprofils, beiträgt.

In einer weiteren bevorzugten Durchführung des Verfahrens wird eine Reparaturplatte an den Schaufelblattstumpf geheftet, die eine Dicke von mindestens der doppelten maximalen Profildicke des Schaufelblattstumpfes aufweist. Damit übersteigt das erfindungsgemäße Stumpfnahtschweißen die bisher bekannten und standardisierten Grenzen und liefert gleichzeitig ein stabiles Schmelzbad im Kantenbereich des Schaufelblattstumpfes, wo das Dickenverhältnis zwischen Reparaturplatte und Schaufelblattstumpfprofil ein Vielfaches des bisher als Grenze bekannten Wertes beträgt.

Eine Reparaturplatte von gebogener oder vorgeformter Krümmung und konstanter Dicke wird vorzugsweise angeheftet, wenn das Schaufelprofil eine geringe Dicke bei gleichzeitig großer Profilsehne aufweist, da in diesem Fall mit einfachen Formgebungswerkzeugen die Krümmung der Reparaturplatte der Krümmung des Schaufelblattstumpfes angenähert werden kann.

Vorzugsweise wird eine Reparaturplatte mit zu den Schaufelkanten hin angeschrägten Bereichen angeheftet, wenn vorteilhaft Schaufelblätter mit hohen Profildicken bei gleichzeitig starker Profilkrümmung repariert werden sollen. In diesem Fall können vorzugsweise einfache Rampenfunktionen für die Schweißparameter in den schrägen Bereichen und damit in den Kantenbereichen des Schaufelblattstumpfes, sowie im Bereich konstanter Dicke der Reparaturplatte konstante Schweißparameter gefahren werden.

Als Verfahren für die Stumpfpfschweißung wird vorzugsweise eine Wolfram-Plasma-Lichtbogen-Schweißung (WPL) im Stichlochverfahren durchgeführt. Durch das Stichloch, das sichtbar entlang der vollen Schweißstoßlänge durchgezogen wird, kann vorteilhaft das Durchschweißen über die ganze Profildicke kontrolliert werden und ein intensives Ineinanderschmelzen von Schaufelblattstumpfschmelzgut von der Reparaturfläche und Reparaturplattenschmelzgut von der Stirnfläche der Reparaturplatte erreicht werden und die Ausbildung einer Schmelzraupe, wie sie sonst nur bei Kehlnähten sowohl im Bereich der Schweißnahtwurzel als auch im Bereich der Schweißnahtoberfläche erzielt werden.

Beim WPL-Schweißen wird vorzugsweise ein Versatz von 55 bis 100 % gegenüber dem Schweißstoß eingehalten, so daß zwischen 55 und 100 % des Lichtbogenfußpunktes und damit der Düsenöffnung auf die Reparaturplatte gerichtet ist und der Rest auf den Schaufelblattstumpf. Die Einhaltung dieses Versatzes läßt sich vorteilhaft leicht durch die Fläche des Lichtbogenfußpunktes überwachen und kann automatisiert werden. Darüber hinausgehende Änderungen der Schweißparameter entlang der stumpfpfschweißnaht sind nicht erforderlich, so daß eine einfache, preiswerte, automatisierte und geometrische Führung der Plasmadüse erfolgt und damit eine fehlerfreie Stumpfschweißnaht mit Ausbildung von kehlnahtartigen Schweißraupen zur Stirnseite der Reparaturplatte hin erfolgen kann.

In einer weiteren bevorzugten Durchführung des Verfahrens wird als Stumpfschweißung eine Laserstrahl- oder Elektronenstrahlschweißung durchgeführt. Zwar ist die Elektronenstrahlschweißung eines der aufwendigsten Stumpfschweißungen die zur Reparatur von Schaufelblättern bekannt sind, doch läßt es sich vorteilhaft nahezu defektfrei bei hoher Reinhaltung des Schmelzgutes aufgrund der Verwendung eines evakuierten Behälters durchführen. Mit dem erfindungsgemäßen Verfahren werden die sonst bei der Laserstrahl- oder Elektronenstrahlschweißung üblichen und bekannten Zusatzwerkstoffstreifen und Auslaufecken, sowie paßgenauen Formteile im Kantenbereich entbehrlich.

Der Laserstrahl hat darüberhinaus gegenüber dem Elektronenstrahlschweißen den Vorteil, daß er ohne Vakuumbehälter angewandt werden kann und gegenüber dem WPL-Schweißen den Vorteil, daß die wärmebeeinflußte Zone und die Schmelzzone wesentlich geringer ist.

Vorzugsweise wird der Laserstrahl auch zum Abtrennen des beschädigten Schaufelblattbereichs eingesetzt, wobei das schmelzflüssige Material mittels Inertgasstrahl, der vorzugsweise aus Stickstoff oder Argon besteht, ausgeblasen wird. Damit wird vorteilhaft eine metallisch blanke Oberfläche geringer Rauhigkeit als Reparaturfläche zur Verfügung gestellt und der im Stand der Technik bekannte und aufwendige Vorbereitungsschritt für die Trennfläche zur Ausbildung einer Reparaturfläche wird auf ein Entgraten der Schnittfläche oder auch auf eine Nachjustage für das anschließende Laserschweißen reduziert. Wird das gesamte Reparaturverfahren vom Trennen bis zum Stumpfschweißen mit einer Laserstrahlanlage durchgeführt, so ergeben sich erhebliche fertigungstechnische Vorteile. Die Haltevorrichtungen zur Ausrichtung des Schaufelblattstumpfes müssen weniger oft gewechselt oder einjustiert werden. Die Verfahrwege des Laserstrahls für das Abtrennen können auch beim Verschweißen eventuell mit geringer Nachjustage, beispielsweise eines Bahnversatzes, beibehalten werden. Die metallisch blanke Oberfläche der Reparaturfläche steht ohne größere Vorbereitungen unmittelbar nach dem Trennen zur Verschweißung mit der Stirnfläche der Reparaturfläche zur Verfügung.

Ein scharfes Abtrennen beschädigter Schaufelblattbereiche ist mittels Ausblasen der Schmelze beim Elektronenstrahlverfahren wegen der einzuhaltenden Vakuumbedingungen nicht möglich, so daß Abtrennen und Verschweißen beim Einsatz des aufwendigen Elektronenstrahlverfahrens in getrennten Anlagen und mit getrennten Verfahren durchzuführen sind.

Vorzugsweise wird auch bei der Laserstrahl- oder Elektronenstrahlschweißung ein Versatz von 55 bis 100% gegenüber dem Schweißstoß eingehalten, so daß zwischen 55 und 100% der Auftreffläche des Strahls auf die Reparaturplatte und der Rest auf den Schaufelblattstumpf auftrifft.

Eine weitere Verbesserung des Verfahrens kann erreicht werden , wenn vorzugsweise der Versatz der Energiequelle gegenüber dem Schweißstoß im Kantenbereich des Schaufelblattstumpfes größer ist, als im Bereich der Profilmitte. Bei der Anwendung dieser Verbesserung ist lediglich eine zweiachsige Führung der Energiequelle erforderlich, die gekoppelt mit der Dickenzu- und - abnahme des Schaufelprofils den örtlichen Versatz der Energiequelle so steuert, daß zunächst bei der Hinterkante des Schaufelblattstumpfes der Versatz größer ist, so daß ein höherer Energieanteil die Reparaturplatte bestrahlt, zur Schaufelblattmitte hin der Versatz geringer wird aber noch immer mindestens 5/9 der Energieeinbringung auf die Reparaturplatte gerichtet ist und zur Vorderkante hin der Versatz wieder größer wird, also mehr als 5/9 der Energieeinbringung die Reparaturplatte trifft. Das hat den Vorteil, daß auch weniger adhäsive Schmelzen zwischen der Stirnseite der Reparaturplatte und der Reparaturfläche des Schaufelblattstumpfes haften bleiben und nicht abtropfen oder durchsacken.

Vorzugsweise wird ein örtlicher Versatz der Energiequelle im Kantenbereich zwischen 75 und 100 % und im Bereich der Profilmitte zwischen 55 und 80% eingehalten. Diese Prozentangaben sind auf den Lichtbogenfußpunkt, der mit der Düsenöffnungsfläche einer WPL-Düse korreliert ist oder auf die Auftreffläche eines Laser- oder Elektronenstrahls, der auf die Reparaturplatte auftrifft, bezogen. Die Feinabstimmung des Verlaufs des Versatzes wird mit der Profildicke korreliert und mit einfachem Vorschub quer zum Schweißstoß gesteuert, so daß die übrigen Schweißparameter unverändert beibehalten werden können.

Da der Schweißvorgang nach wenigen Sekunden beendet ist, wird vorzugsweise ein Nahtverfolgungssystem zur Erfassung und Automatisierung der Stumpfschweißung eingesetzt, wobei ein vorgegebener Verlauf eines örtlichen Versatzes relativ zur Schweißstoßkante eingehalten wird. Das Nahtverfolgungssystem hat den Vorteil, daß auch gekrümmte wie beispielsweise halbkreisförmige Schweißstöße präzise verschweißt werden können.

Eine bevorzugte Verwendung des Verfahrens besteht in der Reparatur von Schaufelblättern integraler Laufräder einer Turbomaschine oder von Laufradschaufeln im an der Laufradscheibe montierten Zustand. Bei integralen Laufrädern einer Turbomaschine bilden Schaufelblätter und Laufradscheibe eine Einheit und sind entweder pulvermetallurgisch hergestellt oder aus einem Vollmaterial elektrochemisch oder spanabhebend herausgearbeitet oder aus Einzelteilen gefügt. Derartig integrale Laufräder stellen einen Fortschritt in Gewichtsersparnis dar und besitzen einen hohen Material und Fertigungswert. Da die Schaufelblätter im Strömungskanal einer Turbomaschine durch Fremdkörpereinwirkung leichter beschädigt werden als die Laufradscheiben ist das erfindungsgemäße Verfahren besonders vorteilhaft zur Reparatur der Schaufelblätter dieser integralen Laufräder geeignet, zumal es einfach handhabbar und kostengünstig anwendbar ist und mit einem Minimum an Paßstücken, nämlich nur einer Reparaturplatte konstanter Dicke, und einem Minimum angepaßte Flächen, nämlich nur einer Stirnseite der Reparaturplatte und einer Reparaturfläche des Schaufelblattstumpfes, auskommmt.

Das erfindungsgemäße Verfahren kann auch vorzugsweise auf Laufradschaufeln im an der Laufradscheibe montierten Zustand angewandt werddn. Dabei wird vorteilhaft die Demontage und Montage jeder Einzelschaufel eingespart und durch die definierte Halterung der Einzelschaufel auf der Laufradscheibe können Haltevorrichtungen, die zum Abtrennen beschädigter Bereiche und zum Anschweißen der Reparaturplatte erforderlich sind, vereinfacht werden.

Ein besonderes Problem bei der Reparatur von Schaufelblättern von Turbomaschinen stellt die Reparatur von Verdichterschaufeln dar. Sie sind im Vergleich zu FAN-Schaufeln und Turbinenschaufeln besonders im Bereich der hochverdichtenden Stufen klein und weisen eine geringe Profildicke auf. Außerdem ist ihre Anzahl pro Verdichterstufe relativ hoch im Vergleich zu FAN-Rotoren. Der Wert der Einzelschaufel ist deshalb entsprechend gering, so daß die bekannten aufwendigen Reparaturverfahren nicht kostendeckend anwendbar und teilweise auch wegen der minimalen Abmessungen technisch nicht durchführbar sind. Da das erfindungsgemäße Verfahren nur eine einzige und relativ einfache Reparaturplatte pro Abtrennung vorsieht und keine hohen Anforderungen an die Schweißparameterregelung stellt, ergeben sich für diese Anwendung besonders wirtschaftliche und technische Vorteile.

Die folgenden Beispiele erläutern in Verbindung mit Zeichnungen beispielhafte Durchführungen des erfindungsgemäßen Verfahrens. Dazu zeigt
- Fig. 1a: eine perspektivische Ansicht eines Schaufelblattstumpfes mit stumpf angesetzter Reparaturplatte konstanter Dicke,
- Fig. 1b: eine Draufsicht auf ein Schaufelblatt mit der Lage unterschiedlicher Trennschnitte,
- Fig. 1c: einen Querschnitt durch ein Schaufelblatt quer zur Längsachse entlang der Trennlinie 10 in Fig. 1b,
- Fig. 2: eine perspektivische Ansicht eines Schaufelblattstumpfes mit stumpf angesetzter profilierter Reparaturplatte,
- Fig. 3: einen Querschnitt einer Stumpfschweißnaht ohne Zugabe von Zusatzwerkstoff beim Schweißen von Platten angepaßter Dicke,
- Fig. 4: einen Querschnitt einer Stumpfschweißnaht bei Zugabe von Zusatzwerkstoff beim Schweißen von Platten angepaßter Dicke und
- Fig. 5: einen Querschnitt einer Stumpfschweißnaht ohne Zugabe von Zusatzwerkstoff beim Schweißen von Platten extrem unterschiedlicher Dicke.

### Beispiel 1

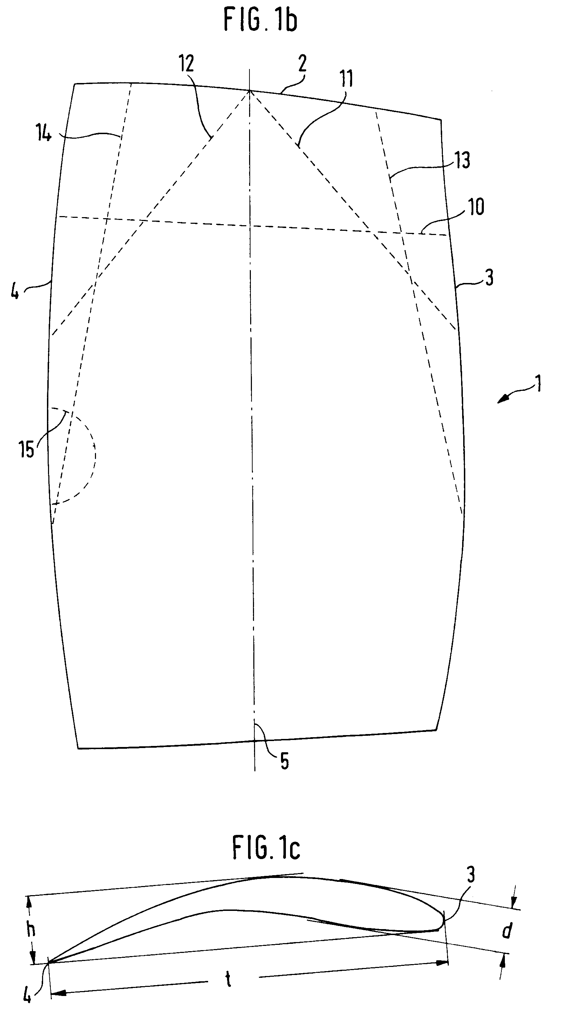

Ein integrales Laufrad einer Verdichterstufe eines Flugtriebwerks aus einer Titanbasislegierung, das beschädigte Schaufelblätter aufweist, wird nach dem erfindungsgemäßen Verfahren repariert. Dazu werden vorbereitend standardisierte Trennschnitte 10,11,12,13,14,15 wie sie Fig. 1b für ein Schaufelblatt 1 zeigt, dort vorgesehen, wo beschädigte Bereiche an den Schaufelblättern 1 visuell oder mittels Rißprüfung festgestellt werden.

Diese Standardisierung der Trennschnitte wurde einerseits aufgrund der vorliegenden Spannungsverteilung bei Querbiegeschwingungen der Schaufelblätter, die Bereiche für ein bevorzugtes Auftreten von Rißschädigungen nahelegt, vorgenommen, andererseits aus Gründen der Zugänglichkeit zum Abtrennen bzw. Anfügen und schließlich aufgrund des Auftretens von Beschädigungen durch Fremdkörpereinwirkungen im Kopf- 2 und Kantenbereich 3,4 des Schaufelblattes 1.

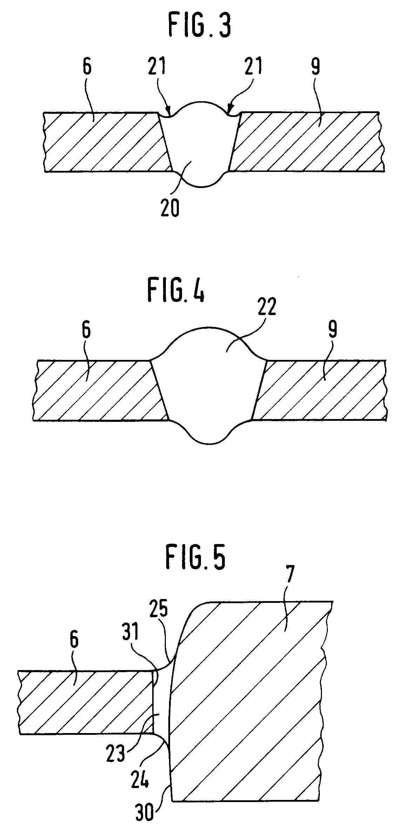

Fig. 1b zeigt die Lage unterschiedlicher Trennschnitte 10,11,12,13,14,15 an der Vorderkante 3 des Schaufelblattes 1 mit den Trennschnitten 11 und 13, an der Hinterkante 4 des Schaufelblattes 1 mit den Trennschnitten 12, 14, 15 und quer zur Längserstreckung 5 des Schaufelblattes 1 mit dem Trennschnitt 10. Die Profildicke d und damit die Materialdicke entlang dieser Trennschnitte 10,11,12,13,14,15 schwankt in diesem Beispiel zwischen 0 und 2,5 mm, wie in Fig. 1c für den Trennschnitt 10 aus Fig. 1b dargestellt. Durch die Veränderung der Materialdicke von 0 bis 2,5 mm müssen die Bearbeitungsparameter beim Trennen und besonders beim Fügen von verbleibendem Schaufelblattstumpf 6 und anzufügender Reparaturplatte 7, wie in Fig. 2 gezeigt, ortsabhängig variert werden.

Die Standardisierung der Trennschnitte hat den Vorteil, daß die Fertigungsparameter zum Trennen und zum Fügen festliegen und nicht für jede Schaufel individuell angepaßt werden müssen. Dadurch wird der Vorrichtungsaufwand minimiert und das Reparaturverfahren weiter vereinfacht.

Zur Vorbereitung der Reparatur werden von im Kopf-2 oder Kantenbereich 3,4 beschädigte Schaufelblättern 1 von Turbomaschinen die beschädigten Bereiche bis auf einen unbeschädigten Schaufelblattstumpf 6 im wesentlichen quer zur Längserstreckung 5 der Schaufel oder schräg zur Vorder-3 oder Hinterkante 4 der Schaufel 1 oder annähernd halbkreisförmig um den beschädigten Schaufelblattbereich herum zur Bildung einer geraden oder annähernd halbkreisförmigen Reparaturfläche 31 abgetrennt. Dabei entfällt beim Lasertrennen von beschädigten Bereichen vorteilhaft ein aufwendiges Vorbereiten der Reparaturfläche des Schaufelblattstumpfes 6 für eine Stumpfschweißung.

Das Lasertrennen wird in diesem Beispiel mit demselben CO₂-Laser mit einer maximalen Ausgangsleistung von 2,5 KW durchgeführt, wie das spätere Laserstrahlschweißen. Als Lasertrennverfahren wird die Verfahrensvariante Hochdruck-Schneiden durchgeführt. Dabei wird das vom Laserstrahl aufgeschmolzene Material durch einen koaxialen Schutzgasstrahl aus beispielsweise Argon aus der Trennfuge getrieben. Die Schaufelkontur an der Trennstelle wird im Teach-in Verfahren programmiert und durch eine Spline-Interpolation geglättet oder es wird im Off-Line -Verfahren gearbeitet, um die Lage des Reparaturverlaufs reproduzierbar zu steuern.

Die Schneidzeit entlang dem Trennschnitt 10 in Fig. 1b ist für eine Profiltiefe t entsprechend Fig. 1c von 30 mm ungefähr 2s. Dabei entsteht eine metallisch blanke Schnittfläche quer zur Schaufellängserstreckung 5 mit dem in Fig. 1c gezeigten Querschnitt. Die mittlere Oberflächenrauhigkeit der entstehenden Reparaturfläche des Schaufelblattstumpfes 6 liegt dabei zwischen 1 und 1,5 µm, bei einer maximalen Rauhigkeit von 10 µm. Ein Vorteil des Lasertrennens im Hochdruckverfahren ist, daß eine minimale wärmebeeinflußte Zone am Schaufelblattstumpf im Bereich der Reparaturfläche von bis zu 100 µm Tiefe in den Schaufelblattstumpf hineinragt. Diese minimal wärmebeeinflußte Zone wird beim nachfolgenden Fügen mit aufgeschmolzen und beeinflußt nicht das Gefüge des Grundmaterials im Schaufelblattstumpf.

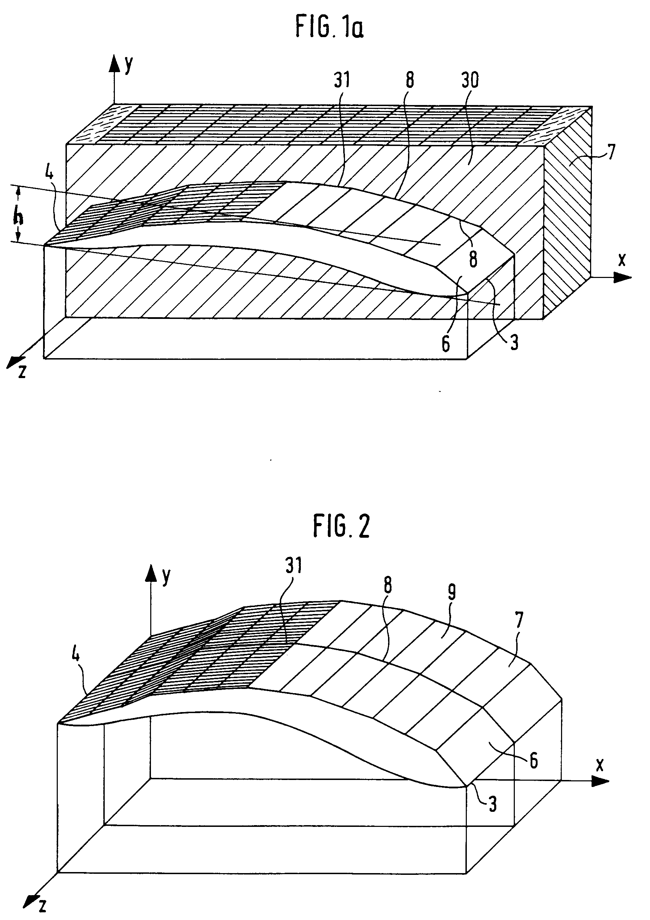

Zum Fügen wird eine Reparaturplatte 6 entsprechend Fig. 1a von konstanter, die maximale Profilhöhe h der Schaufel, wie in Fig. 1c gezeigt, um mehr als 50% übersteigende Dicke mit einer der Reparaturfläche 31 angepaßten Stirnseite 30 stumpf auf die Reparaturfläche 31 geheftet. Danach wird der Schaufelblattstumpf 6 und die Reparaturplatte 7 mittels Stumpfschweißung verschweißt. Abschließend werden die Schweißfuge und die Reparaturplatte 7 auf die Profilkontur des Schaufelblattstumpfes 6 und auf das gewünschte Schaufelblattprofil spanabhebend oder elektrochemisch abgearbeitet.

Das Anschweißen der Reparaturplatte 7 wird in den folgenden Beispielen mit drei alternativen Verfahren an unterschiedlichen Schaufelblättern dieses integralen Laufrades durchgeführt. Diese drei Verfahren sind Wolfram-Plasma-Lichtbogenschweißen (WPL) im Stichlochverfahren, das Laserstrahlschweißen im Tiefstrahlverfahren und das Elektronenstrahlschweißen.

Bei allen drei Verfahren zeigte sich die Überlegenheit des erfindungsgemäßen Verfahrens wie es Fig. 1a in Verbindung mit Fig. 5 zeigt, gegenüber den bekannten Verfahren mit Zugabe von Zusatzwerkstoff, wie es in Fig. 2 in Verbindung mit Fig. 4 gezeigt wird.

### Beispiel 2

Im Beispiel 2 wird das gleiche Bauteil wie in Beispiel 1 repariert. Als Fügetechnik wird hier das WPL-Schweißen für den stumpfen Schweißstoß 8 eingesetzt. Im Gegensatz zum Wolfram-Inertgasschweißen (WIG) wird beim WPL- Schweißen, das sich nach dem Vorbereiten des Schweißstoßes 8 wie er in Fig. 1a und 2 gezeigt wird, anschließt, der zwischen Elektrode und Werkstück übertragene Lichtbogen durch eine gekühlte Kupferdüse eingeschnürt. Durch die dadurch erzielte Reduzierung der Strahldivergenz wird gegenüber dem WIG-Verfahren eine konzentriertere Energieeinbringung und damit eine schmalere Schweißnaht und folglich eine minimierte wärmebeeinflußte Gefügezone erreicht. Dieser Vorteil wird durch das WPL-Schweißen im Stichlochverfahren unterstützt.

Beim Anschweißen einer profilierten Reparaturplatte 9 an einen Schaufelblattstumpf 6 wie es in Fig. 2 in Verbindung mit Fig. 3 gezeigt wird, entstehen jedoch über der gesamten Länge der Schweißnaht im Bereich des Schweißstoßes 20 Randkerben 21, die nur durch Einsatz von Zusatzwerkstoff, wie beispielsweise durch Auflegen eines formschlüssig angepaßten Streifens aus Zusatzwerkstoff auf den Schweißstoß vermieden werden, so daß eine nachbearbeitbare erhabene Schweißraupe 22, wie es Fig. 4 zeigt, an der Oberfläche der Schweißnaht entsteht. Bei Verwendung einer profilierten Reparaturplatte 9, wie es Fig. 2 zeigt ist es darüberhinaus notwendig, alle Schweißparameter, wie Grundzeit, Pulszeit, Grundstrom, Pulsstrom, Schweißgeschwindigkeit, Plasmagasstrom und Vorschub für den Zusatzwerkstoff ortsabhängig zu variieren und mit der Änderung der Materialdicke zu korrelieren.

Ein Verwerfen der profilierten Reparaturplatte 9 und des Schaufelblattstumpfes 6 ist aber auch durch den Zusatzwerkstoff nicht vermeidbar. Im Kantenbereich bei dem die Materialstärke von Schaufelblattstumpf 6 und profilierter Reparaturplatte 9, wie Fig. 2 zeigt, gegen Null geht, besteht darüberhinaus die Gefahr des Durchsackens der Schmelze und des Abrisses der Schmelze.

Bei der erfindungsgemäßen Lösung, wie sie beispielhaft die Fig. 1a zeigt, wird das WPL- Verfahren im Stichlochverfahren auf einen Schweißstoß 8 zwischen einer profilierten Reparaturfläche 31 und einer Stirnfläche 30 angewandt. Die Höhe der Stirnfläche wird durch die Profilhöhe h bestimmt. Da die Höhe der Stirnfläche 30 die Profilhöhe h erfindungsgemäß um mindestens 50% übersteigt, kann sie entgegen der Überzeugung des Fachwelt ein Vielfaches der Materialdicke des Schaufelblattstumpfes 6 ausmachen, zumal die Materialdicke des Schaufelblattstumpfes 6 zu den Schaufelblattkanten 3,4 hin gegen Null geht. Die Höhe der Stirnfläche und die damit verbundene konstante Dicke der Reparaturplatte 7 reichen aus um einen Verzug zu unterdrücken. Die Breite der Stirnfläche richtet sich nach der Länge des Trennschnittes und übersteigt diesen um mindestens 2 mm zur Vorderkante 3 und zur Hinterkante 4 hin.

Aufgrund der Adhäsion der Schmelze zwischen der hohen Stirnfläche 30 und der vergleichsweise niedrigen Reparaturfläche 31 bildet sich eine nicht abtropfende oder durchsackende Schmelzzone 23 aus, wie es Fig. 5 zeigt. Aufgrund dieser Schmelzzone 23 erstarrt die Schweißnaht zur Wurzel und zur Schweißnahtoberfläche hin mit einer kehlnahtartigen Schweißraupe 24,25, wobei kein zusätzliches Füllmaterial erforderlich ist.

In diesem Beispiel wird über die gesamte Schweißnahtlänge ein Versatz von 75% plus oder minus 5% Meßtoleranz eingehalten, so daß ca. 75% des Lichtbogenfußpunktes, der mit der Fläche der Öffnung der Kupferdüse korreliert, auf die Reparaturplatte 7 gerichtet ist und der Rest auf den Schaufelblattstumpf 6 und damit 75% der Fläche des Lichtbogenfußpunktes die Reparaturplatte 7 aufheizt. Mit dem WPL-Stichlochschweißen wurde in diesem Beispiel eine Breite der Schweißzone von 4 bis 6 mm erreicht.

### Beispiel 3

In diesem Beispiel wird zur Stumpfschweißung am gleichen Bauteil wie in Beispiel 1 ein Laserstrahlschweißen eingesetzt, nachdem bereits mittels Lasertrennen eine geeignete metallisch blanke Reparaturfläche 31 hergestellt wurde. Auch bei diesem Verfahren erbringen die Schweißversuche nach Figur 2 keine zufriedenstellenden Ergebnisse. Erst die erfindungsgemäße Anordnung nach Fig. 1a liefert eine Stumpfschweißung frei von Verzerrungen, ohne Zusatzwerkstoff und ohne entsprechend ausgebildeten Zusatzwerkstoffstreifen oder Kantenauslaufstücke sowie ohne angepaßte formststabile Unterlagen zur Stützung der Schmelze in den Kantenbereichen.

Die ausgezeichnete Fokussierbarkeit der Laserstrahlung ermöglicht eine sehr konzentrierte Energieeinbringung und damit im Bereich des Tiefenschweißeffektes äußerst schmale Schweißnähte und eine geringe Wärmebelastung des Werkstücks. Ein weiterer Vorteil des Laserverfahrens besteht darin, die beiden Laserfertigungsverfahren Trennen und Fügen kombiniert einzusetzen.

Als Plasmagas wird in diesem Beispiel ausschließlich Helium verwendet. Die Gaszufuhr erfolgt koaxial zum Laserstrahl. Zusätzlich wird ein Schutzgas konzentrisch zum Plasmagas und ein Wurzelgas, das die Schweißwurzel schützt verwendet. Als Schutzgas wird Argon oder Helium eingesetzt.

Zur Fokussierung des Laserstrahls wird eine Linse mit 5'' Brennweite verwendet. Damit wird bei einem Fokusradius von 0,13 mm und einer mittleren Leistung von ungefähr 2kW eines CO₂-Lasers eine maximale Intensität von etwa 6 MW/cm² erziehlt und eine Schweißgeschwindigkeit von 20 mm/s gefahren. Die vorprogrammierte Schweißbahn ist in diesem Fall eine nahezu gerade Bahn mit einem seitlichen Versatz von über 75 %, wobei über 75 % der Auftreffläche des Lasersterahls auf die Reparaturplatte 7 gerichtet sind und der Rest auf den Schaufelblattstumpf 6. Zu den Kanten hin ist der Versatz etwas größer eingestellt als zur Mitte des Schaufelprofils. Dabei nimmt der Versatz in diesem Beispiel von der Vorderkante 3 bis zur Schaufelblattmitte hin um 10% ab und von der Mitte bis zur Hinterkante um 20% zu.

Dieser seitliche Versatz ist ein kritischer Einstellparameter bei der erfindungsgemäßen Verfahrensanordnung nach Fig. 1a, da ein zu großer seitlicher Versatz zu Bindefehlern zwischen Stoßkanten und Schweißnaht führt, und ein zu geringer seitlicher Versatz ein Durchsacken der Schmelze, so daß sich Randkerben bilden oder einen Abriß der Schmelze bewirken kann. Mit dem Laserstrahlschweißen wird in diesem Beispiel eine Breite der Schweißzone von 1,5 bis 2 mm erreicht und damit um mindestens den Faktor 3 kleiner als beim WPL-Stichlochschweißen.

### Beispiel 4

Ein gleiches Bauteil wie in Beispiel 1 wird entsprechend mittels Laserstrahltrennen zur Bildung einer Reparaturfläche an einem Schaufelblattstumpf 6 zur Stumpfschweißung vorbereitet. Als Schweißverfahren wird ein Elektronenstrahlschweißverfahren eingesetzt.

Zur Reparatur von Schaufelblättern eines integralen Laufrades wird eine Elektronenstrahlschweißanlage von 30 kW mit einer maximalen Beschleunigungsspannung von 150 kV eingesetzt. Die Bearbeitungskammer kann bis zu einem Druck von 50 mPa evakuiert werden. Die Schweißbahn wird wie in Beispiel 3 seitlich versetzt. Der Bahnversatz als Einstellparameter kann sich beim Elektronenstrahlschweißen als weniger kritisch wenn mit einem defokussierten Strahl geschweißt wird. Die Schweißgeschwindigkeit ist in diesem Beispiel 50 mm/s bei einer Strahlleistung von 6,6 kW.

Laserstrahlschweißen und Elektronenstrahlschweißen zeichnen sich durch eine weitaus schmalere Wärmeeinflußzone gegenüber dem WPL-Stichlochschweißen aus. Da beispielsweise für Ti-Legierungen bekannt ist, daß beim Spannungsarmglühen, das dem Schweißprozess in allen Beispielen nachgeordnet ist, kein vollständiger Abbau der durch das Schweißen induzierten Eigenspannungen erfolgt, sind für die mit dem Laserstrahlschweißen oder Elektronenstrahlschweißen geschweißten Schaufelblätter wegen der geringeren wärmebeeinflußten Zone höhere Festigkeitswerte als für die mit dem WPL-Stichlochschweißen reparierten Schaufelblätter zu erwarten.

Das WPL- Stichlochschweißen ist das kostengünstigste Schweißverfahren. Die Kosten für das Laserstrahlschweißen sind wiederum günstiger als für das Elektronenstrahlschweißen. Die Kosten verbessern sich jedoch im Hinblick auf das Laserverfahren, wenn Trennen und Fügen zu dem erfindungsgemäßen Gesamtreparaturverfahren kombiniert werden, da das Abtrennen der beschädigten Bereiche und das anschließende Anfügen der Reparaturplatte 7 ohne Zwischenschritt ermöglicht wird und mit der gleichen Anlage und in der gleichen Aufspannung durchführbar ist, so daß sich die Durchlaufzeiten für die gesamte Reparatur wesentlich verkürzen.

## Patentansprüche

1. Reparaturverfahren für im Kopf- oder Kantenbereich beschädigte Schaufelblätter von Turbomaschinen mit folgenden Verfahrensschritten:
a) Abtrennen der beschädigten Bereiche bis auf einen unbeschädigten Schaufelblattstumpf im wesentlichen quer zur Längserstreckung der Schaufel oder schräg zur Vorder- oder Hinterkante der Schaufel oder annähernd halbkreisförmig um den beschädigten Schaufelblattbereich herum zur Bildung einer geraden oder annähernd halbkreisförmigen Reparaturfläche,
b) Vorbereiten der Reparaturfläche des Schaufelblattstumpfes für eine Stumpfschweißung, wobei
c) eine Reparaturplatte (7) von konstanter, die maximale Profilhöhe (h) der Schaufel um mehr als 50% übersteigender Dicke mit einer der Reparaturfläche (8) angepaßten Stirnseite (30) stumpf auf die Reparaturfläche geheftet wird,
d) danach der Schaufelblattstumpf (6) und die Reparaturplatte (7) mittels Stumpfschweißung verschweißt und
e) abschließend die Schweißfuge und die Reparaturplatte (7) auf die Profilkontur des Schaufelblattstumpfes (6) und auf das gewünschte Schaufelblattprofil abgearbeitet werden.

2. Verfahren nach Anspruch 1, dadurch gekennzeichnet, daß durch örtlichen Versatz der Energiequelle relativ zum Schweißstoß die Energiezufuhr bei der Stumpfschweißung zu mehr als 5/9 auf die Reparaturplatte (7) gerichtet wird.

3. Verfahren nach Anspruch 1 oder 2, dadurch gekennzeichnet, daß eine Reparaturplatte (7) an den Schaufelblattstumpf (6) geheftet wird, die eine Dicke von mindestens der doppelten maximalen Profildicke des Schaufelblattstumpfes (6) aufweist.

4. Verfahren nach einem der Ansprüche 1 bis 3, dadurch gekennzeichnet, daß eine Reparaturplatte (7) von gebogener oder vorgepreßter oder vorgeformter Krümmung und konstanter Dicke (d) angeheftet wird.

5. Verfahren nach einem der Ansprüche 1 bis 4, dadurch gekennzeichnet, daß eine Reparaturplatte (7) mit zu den Schaufelkanten (3,4) hin angeschrägten Bereichen angeheftet wird.

6. Verfahren nach einem der Ansprüche 1 bis 5, dadurch gekennzeichnet, daß als Stumpfschweißung eine Wolfram-Plasma-Lichtbogen-Schweißung (WPL) im Stichlochverfahren durchgeführt wird.

7. Verfahren nach Anspruch 6, dadurch gekennzeichnet, daß beim WPL-Schweißen ein Versatz von 55 bis 100% gegenüber dem Schweißstoß eingehalten wird, so daß zwischen 55 und 100% der Fläche des Lichtbogenfußpunktes auf die Reparaturplatte (7) gerichtet ist und der Rest auf den Schaufelblattstumpf (6).

8. Verfahren nach einem der Ansprüche 1 bis 5, dadurch gekennzeichnet, daß als Stumpfschweißung eine Laserstrahl-oder Elektronenstrahlschweißung durchgeführt wird.

9. Verfahren nach Anspruch 8, dadurch gekennzeichnet, daß bei der Laserstrahl- oder Elektronenstrahlschweißung ein Versatz von 55 bis 100 % gegenüber dem Schweißstoß eingehalten wird, so daß zwischen 55 und 100 % der Auftreffläche des Strahls auf die Reparaturplatte (7) und der Rest auf den Schaufelblattstumpf (6) auftrifft.

10. Verfahren nach einem der Ansprüche 2 bis 9, dadurch gekennzeichnet, daß der Versatz der Energiequelle gegenüber dem Schweißstoß im Kantenbereich des Schaufelblattstumpfes (6) größer ist, als im Bereich der Profilmitte.

11. Verfahren nach einem der Ansprüche 2 bis 10, dadurch gekennzeichnet, daß ein örtlicher Versatz der Energiequelle im Kantenbereich zwischen 75 und 100 % und im Bereich der Profilmitte zwischen 55 und 80 % eingehalten wird, bezogen auf die Fläche des Lichtbogenfußpunktes einer WPL-Düse die auf die Reparaturplatte (7) gerichtet ist oder auf die Auftreffläche eines Laser- oder Elektronenstrahls, der auf die Reparaturplatte (7) auftrifft.

12. Verfahren nach einem der Ansprüche 1 bis 11, dadurch gekennzeichnet, daß ein Nahtverfolgungssystem zur Erfassung und Automatisierung der Stumpfschweißung eingesetzt wird, wobei ein vorgegebener Verlauf eines örtlichen Versatzes relativ zur Schweißstoßkante eingehalten wird.

13. Verfahren nach einem der Ansprüche 1 bis 12, dadurch gekennzeichnet, daß zum Abtrennen ein Laserstrahl eingesetzt wird, wobei das schmelzflüssige Material mittels Inertgasstrahl, der vorzugsweise aus Stickstoff oder Argon besteht, ausgeblasen wird.

14. Verwendung des Verfahrens nach einem der Ansprüche 1 bis 13 zur Reparatur von Schaufelblättern integraler Laufräder einer Turbomaschine oder von Laufradschaufeln im an der Laufradscheibe montierten Zustand.

15. Verwendung des Verfahrens nach einem der Ansprüche 1 bis 13 zur Reparatur von Verdichterschaufeln.

## Claims

1. A repair method for turbo engine blades damaged in the head or the edge area, with the following steps:
a) Separating-off the damaged areas down to an undamaged blade-stump substantially crosswise to the longitudinal projection of the blade, or at an angle to the front or rear edge of the blade, or approximately in a semi-circle around the damaged blade area to form a straight or approximately semi-circular repairing surface,
b) Preparing the repairing surface of the blade-stump for a butt welding, wherein
c) a repair plate (7) of a constant thickness, exceeding the maximum profile height (h) of the blade by more than 50%, with a front side (30) is aligned to the repair face (8), and attached flush to the repair face,
d) after this, the blade-stump (6) and the repair plate (7) are welded by butt-welding, and
e) finally, the welding joint and the repair plate (7) are finished to the profile contour of the blade-stump (6) and to the required blade profile.

2. A method according to claim 1, characterised in that by local offsetting of the energy source relative to the weld impact when butt-welding, more than 5/9 of the energy supply is directed onto the repair plate (7).

3. A method according to claim 1 or 2, characterised in that a repair plate (7) having a thickness of at least twice the maximum profile thickness of the blade-stump (6) is attached to the blade-stump (6).

4. A method according to any one of claims 1 to 3, characterised in that a repair plate (7) of a curved or pre-pressed or pre-formed curvature and constant thickness (d) is attached.

5. A method according to any one of claims 1 to 4, characterised in that a repair plate (7) is attached with areas chamfered towards the blade edges (3, 4).

6. A method according to any one of claims 1 to 5, characterised in that for butt welding, a tungsten-plasma-arc-welding (WPL) is carried out using the taphole method.

7. A method according to claim 6, characterised in that during tungsten-plasma-arc-welding, an offsetting of 55 to 100% in relation to the weld impact is maintained, so that between 55 and 100% of the face of the arc base is directed onto the repair plate (7) and the rest onto the blade-stump (6).

8. A method according to any one of claims 1 to 5, characterised in that for butt welding, laser-beam or electron-beam welding is carried out.

9. A method according to claim 8, characterised in that when laser-beam or electron-beam welding, an offsetting of 55 to 100% in relation to the weld impact is maintained, so that between 55 and 100% of the incidence face of the beam strikes the repair plate (7) and the rest the blade-stump (6).

10. A method according to any one of claims 2 to 9, characterised in that the offsetting of the energy source in relation to the weld impact is greater in the edge area of the blade-stump (6) than in the area of the profile centre.

11. A method according to any one of claims 2 to 10, characterised in that a local offsetting of the energy source is maintained between 75 and 100% in the edge area, and between 55 and 80% in the area of the profile centre, in relation to the face of the arc base of a tungsten-plasma-arc-welding nozzle which is directed onto the repair plate (7) or onto the incidence face of a laser or electron beam which strikes the repair plate (7).

12. A method according to any one of claims 1 to 11, characterised in that a seam tracking system is employed for the detection and automation of the butt welding, a pre-set course of a local offsetting relative to the weld impact edge being maintained.

13. A method according to any one of claims 1 to 12, characterised in that a laser beam is employed for separating-off, the molten material being blown out by means of a jet of inert gas, consisting preferably of nitrogen or argon.

14. An application of the method according to any one of claims 1 to 13 for repairing the blades of integral turbine wheels of a turbo engine or turbine wheel blades when mounted on the turbine wheel disk.

15. An application of the method according to any one of claims 1 to 13 for repairing compressor blades.

## Revendications

1. Procédé de réparation pour des aubes de turbomachines endommagées dans la zone du sommet et des bords, comprenant les étapes de procédé suivantes :
a) séparation des zones endommagées jusqu'à un tronçon d'aube non endommagé essentiellement transversalement à l'étendue longitudinale de l'aube ou en biais par rapport au bord avant ou au bord arrière de l'aube, ou approximativement en demi-cercle autour de la zone de l'aube endommagée, pour former une surface de réparation droite ou approximativement en demi-cercle,
b) préparation de la surface de réparation du tronçon d'aube en vue d'un soudage bout à bout, dans lequel,
c) une plaque de réparation (7), d'épaisseur constante dépassant la hauteur de profil (h) maximale de l'aube de plus de 50 %, est pointée sur la surface de réparation bout à bout avec un côté frontal (30) adapté à la surface de réparation (8),
d) puis, le tronçon d'aube (6) et la plaque de réparation (7) sont soudés par soudage bout à bout, et
e) pour terminer, la rainure de soudage et la plaque de réparation (7) sont travaillées par réduction sur le contour du profil du tronçon d'aube (6) et sur le profil d'aube souhaité.

2. Procédé selon la revendication 1, caractérisé en ce que, par déplacement localisé d'une source d'énergie par rapport au joint de soudure, la fourniture d'énergie est, lors du soudage bout à bout, dirigée, à raison de plus de 5/9 sur la plaque de réparation (7).

3. Procédé selon la revendication 1 ou 2, caractérisé en ce qu'une plaque de réparation (7) est pointée sur le tronçon de l'aube (6), qui présente une épaisseur au moins deux fois supérieure à l'épaisseur du profil maximum du tronçon de l'aube (6).

4. Procédé selon l'une des revendications 1 à 3, caractérisé en ce qu'on pointe une plaque de réparation (7) présentant une courbure incurvée ou préformée et une épaisseur constante (d).

5. Procédé selon l'une des revendications 1 à 4, caractérisé en ce qu'on pointe une plaque de réparation (7) avec les zones biaisées jusqu'aux bords de l'aube (3, 4).

6. Procédé selon l'une des revendications 1 à 5, caractérisé en ce qu'on réalise, en tant que soudage bout à bout, un soudage à l'arc transféré au jet de plasma (WPL) dans un procédé en bouchon.

7. Procédé selon la revendication 6, caractérisé en ce que, lors du soudage à l'arc transféré au jet de plasma (WPL), on observe un déplacement de 55 à 100 % par rapport au joint de soudure, si bien que 55 à 100 % de la surface de la racine de l'arc électrique est dirigé sur la plaque de réparation (7) et le reste contre le tronçon de l'aube (6).

8. Procédé selon l'une des revendications 1 à 5, caractérisé en ce qu'on réalise, en tant que soudage bout à bout, un soudage au laser ou un soudage par bombardement électronique.

9. Procédé selon la revendication 8, caractérisé en ce que, lors du soudage au laser ou du soudage par bombardement électronique, on observe un déplacement de 55 à 100 % par rapport au joint de soudure, si bien que 55 à 100 % de la surface de contact du rayon donne contre la plaque de réparation (7) et le reste donne contre le tronçon de l'aube (6).

10. Procédé selon l'une des revendications 2 à 9, caractérisé en ce que le déplacement de la source d'énergie par rapport au joint de soudure, est plus important dans la zone des bords du tronçon d'aube (6),que dans la zone du centre du profil.

11. Procédé selon l'une des revendications 2 à 10, caractérisé en ce qu'on observe un déplacement localisé de la source d'énergie dans la zone des bords de 75 à 100 % et dans la zone du centre du profil de 55 à 80 %, rapporté à la surface de la racine de l'arc électrique d'une buse WPL qui est dirigée sur la plaque de réparation (7) ou à la surface de contact d'un rayon laser ou électronique, qui est dirigée sur la plaque de réparation (7).

12. Procédé selon l'une des revendications 1 à 11, caractérisé en ce qu'on utilise un système de suivi de soudure pour la saisie et l'automatisation du soudage bout à bout, dans lequel est respecté un déroulement donné d'un déplacement localisé par rapport au bord du joint de soudure.

13. Procédé selon l'une des revendications 1 à 12, caractérisé en ce que, pour la séparation, on utilise un rayon laser, la matière en fusion liquide étant ce faisant éteinte au moyen d'un jet de gaz inerte, qui se compose de préférence d'azote ou d'argon.

14. Utilisation du procédé selon l'une des revendications 1 à 13 pour la réparation d'aubes de roues à aubes intégrales d'une turbomachine ou d'aubes de roues à l'état monté dans le disque de roue.

15. Utilisation du procédé selon l'une des revendications 1 à 13 pour la réparation d'aubes de compresseurs.
